# EUROPÄISCHE PATENTSCHRIFT

(11) **EP 3 013 132 B1**
(45) Veröffentlichungstag und Bekanntmachung des Hinweises auf die Patenterteilung: **26.04.2017**
(21) Anmeldenummer: 14744754.4
(22) Anmeldetag: 27.06.2014
(51) Int. Cl.: A01B 3/46

(54) **SCHWENKSTÜTZRAD FÜR EINEN DREHPFLLUG**
PIVOTING SUPPORT WHEEL FOR A REVERSIBLE PLOUGH
ROUE D'APPUI PIVOTANTE POUR UNE CHARRUE RÉVERSIBLE

(30) Priorität: 28.06.2013 DE 102013106783
(43) Veröffentlichungstag der Anmeldung: 04.05.2016
(73) Patentinhaber: Lemken GmbH & Co. KG, 46519 Alpen (DE)
(72) Erfinder: EIRMBTER, Sebastian, 47877 Willich (DE)
(74) Vertreter: Schulte & Schulte
(86) Internationale Anmeldenummer: PCT/DE2014/100218
(87) Internationale Veröffentlichungsnummer: WO 2014/206401

(56) Entgegenhaltungen:
- DE-A1- 2 421 373
- DE-A1- 2 554 273
- DE-A1-102006 039 513
- DE-U- 7 538 474

## Beschreibung

Die Erfindung schlägt ein Schwenkstützrad für einen Drehpflug gemäß dem Oberbegriff des Patentanspruches 1 vor.

Drehpflüge, sowohl große Aufsattelpflüge als auch insbesondere Anbaudrehpflüge werden in der Regel mit Schwenkstützrädern zur Tiefenbegrenzung der Pflugwerkzeuge ausgestattet. Die paarweise gegenüberliegend zum Pflugrahmen angebrachten Pflugwerkzeuge wenden den Boden in eine Richtung. Nach einer Überfahrt über das zu pflügende Feld wird der Drehpflug um seine Rahmenachse um 180 Grad gewendet, um bei der Rückfahrt über das zu pflügende Feld einen Furchenanschluss und ein ebenes Pflugbild auf dem Feld zu erhalten. Durch diesen Pflugwendevorgang schwenkt das Schwenkstützrad ebenfalls in eine zum Pflugrahmen gegenüberliegende, tiefere Position, um auch bei der Rückfahrt die Arbeitstiefe der Pflugwerkzeuge zu begrenzen. Die Arbeitstiefe wird dabei meist durch den Schwenkwinkel des Stützrades vorgegeben. Hier sind mechanische Begrenzungen in Form von Anschlagspindeln, Bolzenanschlägen etc. bekannt geworden. Oft sind diese Lösungen aufgrund der dynamischen Eigenschaften des Schwenkvorganges jedoch störanfällig und können die sichere Vorgabe einer Pflugarbeitstiefe nicht immer gewährleisten. Eine solche Vorrichtung wird im deutschen Gebrauchsmuster DE 75 38 474 U1 beschrieben. Um ein Durchschwenken des Stützrades nach vorne beim Aufsetzen des Pfluges zu vermeiden, wird die Schwenkbewegung des Rades nach vorne mit einer Falle oder über eine Schwerpunktsverlagerung des Rades verhindert. Die Schwenkbewegung nach hinten in Arbeitsstellung wird mit einem verstellbaren Anschlag zur Tiefeneinstellung des Pfluges begrenzt. Am gleichen Tag wird eine weitere Lösung in der DE 25 54 273 C2 vorgeschlagen, bei der die Drehbarkeit des Stützrades um seine Laufachse in eine vertikale Position des Stützradhalters durch eine Bremsvorrichtung verhindert wird. Durch das abgebremste Rad schwenkt das Stützrad bei Vorwärtsbewegung des Pfluges nach hinten und wird wie zuvor beschrieben mit einem verstellbaren Anschlag zur Tiefeneinstellung des Pfluges begrenzt. Auch hydraulische Begrenzungen für den Schwenkwinkel des Stützrades sind bekannt. Eine komfortable und funktionssichere Lösung ist beispielsweise in der deutschen Offenlegungsschrift DE 10 2006 039 513 A1 beschrieben. Aufgrund der teuren Hydraulikkomponenten wird diese Lösung jedoch eher von komfortbewussten Anwendern bevorzugt.

Aufgabe der Erfindung ist es damit, ein kostengünstiges und funktionssicheres Schwenkstützrad bereitzustellen, welches kompakt gebaut und einfach aus wenigen Teilen zu montieren ist.

Diese Aufgabe wird durch die Merkmale des kennzeichnenden Teiles des Anspruches 1 gelöst.

Dadurch, dass beim Wenden des ausgehobenen Drehpfluges um seine Drehwerksachse das Schwenkstützrad aus einer höheren in die tiefstmögliche Stellung fällt, gleitet die Klinke aufgrund ihrer Anordnung über die Ausnehmungen des Zahnsegmentes und die Kontur der Abdeckung hinweg in eine Endlage. Nach Absenken des Pfluges bis in die Arbeitsstellung der Pflugwerkzeuge stützt sich das Stützrad auf dem Boden ab und das Schwenkstützrad schwenkt wieder in entgegengesetzte Position in Richtung Rahmen zurück. Dabei gleitet die Klinke bis zum Ende der Kontur der Abdeckung und fällt durch ihr Eigengewicht in die erstmögliche und damit wirksame Ausnehmung des Zahnsegmentes hinter dem Ende der Kontur der Abdeckung. Somit wird eine weitere Schwenkbewegung des Schwenkstützrades begrenzt. Je nach dem, wie weit die Abdeckung einen Teil des Zahnsegmentes überdeckt, fällt die Klinke in eine gewählte Ausnehmung des Zahnsegmentes und ermöglicht verschieden einstellbare Schwenkwinkel des Schwenkstützrades und somit eine einfache Justierung der Arbeitstiefe der Pflugwerkzeuge. Diese Überdeckung kann durch Verstellen der Lage der Abdeckung zum Zahnsegment verändert werden.

Dass die Überdeckung des Zahnsegmentes durch Verstellen der Lage der Abdeckung zum Zahnsegment veränderbar ist, erlaubt eine variable Einstellung des jeweiligen wirksamen bzw. unwirksamen Bereiches durch Ermöglichung oder Verhinderung des Einfalls der Klinke in eine entsprechende Ausnehmung.

In einer speziellen Ausführung der Erfindung ist das Zahnsegment einem Teil des Pflugrahmens und die Klinke dem Schwenkstützrad zugeordnet. Durch diese Anordnung der Bauteile wird eine einfache Bauweise der Vorrichtung erreicht, welche sich in seiner Funktion nicht durch herabfallende Erntereste und Erdklumpen während des Wendevorganges des Drehpfluges beeinträchtigen lässt.

Eine weitere Variante der Erfindung sieht vor, dass die Klinke einem Teil des Pflugrahmens und das Zahnsegment dem Schwenkstützrad zugeordnet ist. Durch diese Bauweise wird eine sehr kompakte Anordnung der Abdeckung über dem Zahnsegment erreicht.

In einer besonderen Ausführung der Erfindung ist die wirksame Länge der Klinke oder der wirksame Abstand der Klinke zum Zahnsegment hin einstellbar ausgebildet. Durch diese Einstellbarkeit wird eine weitere und noch genauere Verstellmöglichkeit des Schwenkwinkels des Schwenkstützrades über den Teilungswinkel der Ausnehmungen des Zahnsegmentes hinaus ermöglicht.

Als vorteilhaft ist es auch anzusehen, wenn die Schwenkgeschwindigkeit des Schwenkstützrades durch eine Dämpfungsvorrichtung begrenzt ist. Insbesondere bei schnellen Wendevorgängen des Drehpfluges wird die Haltbarkeit der Vorrichtung verbessert.

In einer speziellen Ausführung der Erfindung wird die Bewegung der Klinke oder das formschlüssige Zusammenspiel der Klinke mit dem Zahnsegment durch einen Energiespeicher oder durch Fremdenergie unterstützt. Durch Einsatz eines Energiespeichers wie beispielsweise einer Feder, eines Magneten oder anderer elastischer Stellelemente wird die Funktionssicherheit der Vorrichtung auch bei Hanglagen und fahrdynamischen Einflüssen noch besser gewährleistet. Auch schaltbare Einrichtungen mit Fremdenergie wie Fluidzylinder und magneto- oder elektromotorische Einrichtungen sind denkbar. Diese können auch durch eine Steuereinheit aktiv betätigt werden, beispielsweise in Abhängigkeit des Schwenkvorganges oder anderer Signale.

In einer noch weiter gehenden Ausführung der Erfindung ist der Radhalm und das Stützrad mit einer weiteren Schwenkvorrichtung in der Längsachse des Radhalmes um einen Winkel von annähernd 90° verschwenkbar ausgeführt. Durch diese Anordnung übernimmt das Schwenkstützrad die Funktion eines Transportrades, welches als nachlaufendes Spornrad in einer mittigen, arretierten Schwenkstellung des Drehpfluges einen Teil des Pfluggewichtes während der Transportfahrt trägt.

Die Erfindung zeichnet sich insbesondere dadurch aus, dass ein einfach zu montierendes und aus wenigen Teilen kostengünstig zusammengebautes Schwenkstützrad geschaffen ist, welches durch eine Klinke in Wirkverbindung mit einem Zahnsegment eine variable, fein justierbare Tiefenführung eines Drehpfluges ermöglicht und durch bewegliche Abdeckungen komfortabel eingestellt werden kann.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
- Figur 1: eine Ansichtsperspektive eines in seiner Arbeitsbreite verstellbaren Anbauvolldrehpfluges,
- Figur 2: einen Anbauvolldrehpflug in Seitenansicht,
- Figur 3: ein Schwenkstützrad in perspektivischer Ansicht,
- Figur 4: das Schwenkstützrad von der in Fahrtrichtung linken Seite gesehen und
- Figur 5: eine Draufsicht des Schwenkstützrades.

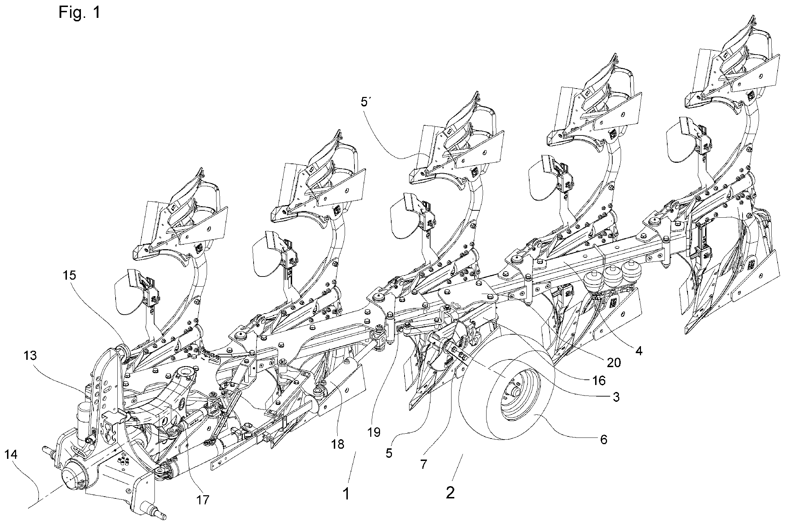

Figur 1 zeigt einen in der Arbeitsbreite verstellbaren Drehpflug 1 zum Anbau an die Dreipunkthydraulik eines Traktors. Dabei werden die Unter- und Oberlenker der Dreipunkthydraulik mit dem Anbauturm 13 verbunden. Über die Dreipunkthydraulik kann der Traktor den gesamten Pflug über den Boden ausheben oder bis auf die Arbeitstiefe der Pflugwerkzeuge 5 absenken. Der Pflugrahmen 4 mit seinen Pflugwerkzeugen 5 ist um die Wendeachse 14 drehbar mit dem Anbauturm 13 verbunden. Ein Wendezylinder 15, welcher gelenkig mit dem Anbauturm 13 verbunden ist und an einem Hebel seitlich zur Wendeachse 14 angreift, kann den Pflugrahmen 4 mit seinen Einzelteilen, den Pflugwerkzeugen 5 und dem Schwenkstützrad 2 gemeinsam von einer links wendenden Stellung um ca. 180 Grad in eine rechts wendende Stellung und umgekehrt umschwenken. Der Pflugrahmen 4 ist über einen Lenker 17 und Verstelleinrichtungen mit der Wendeachse 14 verbunden. Der Pflugrahmen kann im Winkel zur Wendeachse mit dem Hydraulikzylinder 18 verschwenkt werden. Hierdurch kann die Schnittbreite der mit einem Gestänge 19 parallel zur Fahrtrichtung 12 geführten Pflugwerkzeuge 5 eingestellt werden. Mittels zweier Rahmenplatten 20,20' ist der Stützradhalter 16 in der Draufsicht schwenkbar am Pflugrahmen 4 befestigt und wird über das Gestänge 19 ebenfalls annähernd parallel zur Fahrtrichtung 12 und den Pflugwerkzeugen 5 geführt. Der Radhalm 7 des Schwenkstützrades 2 ist wiederum drehbar über einen Zapfen in einer dafür vorgesehenen Lagerung des Stützradhalters 16 um die Schwenkachse 3 drehbar gelagert und fällt beim Ausheben oder Wenden des Drehpfluges aufgrund seines Gewichtes immer in die durch Anschläge begrenzte, tiefst mögliche Position. Am anderen Ende des Radhalmes 7 ist das Stützrad 6 drehbar gelagert.

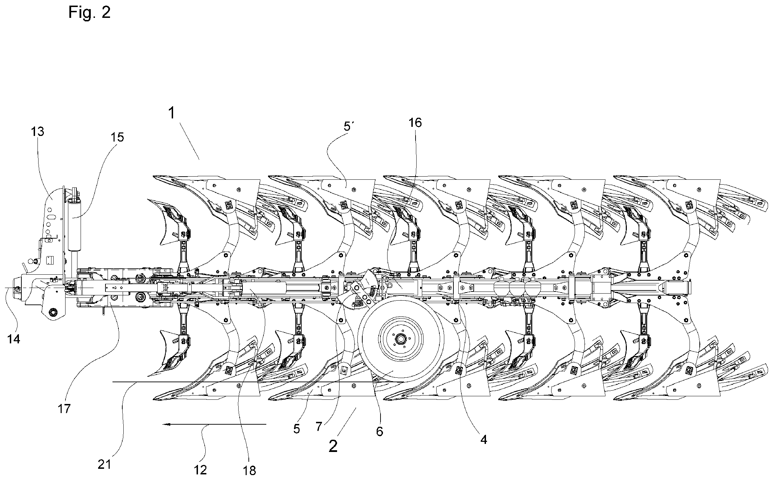

Figur 2 zeigt eine Seitenansicht des Drehpfluges 1 in Fahrtrichtung 12 seitlich von links gesehen. Dargestellt sind der Anbauturm 13 zur Kopplung an die Dreipunkthydraulik des Traktors sowie die drehbare Wendeachse 14 und den über einen Hebel daran angreifenden Wendezylinder 15. Der Lenker 17 verbindet den Pflugrahmen 4 mit der Wendeachse 14. An dem Pflugrahmen sind die Pflugwerkzeuge 5 und das Schwenkstützrad 2 über den Stützradhalter 16 angebaut. Das Schwenkstützrad 2 ist hier in Arbeitsposition gezeigt und stützt sich mit seinem Stützrad 6 auf dem Boden 21 ab und gibt somit zusammen mit dem Radhalm 7, dem Zahnsegment 9 und der Klinke 8 die Arbeitstiefe der Pflugwerkzeuge 5 vor.

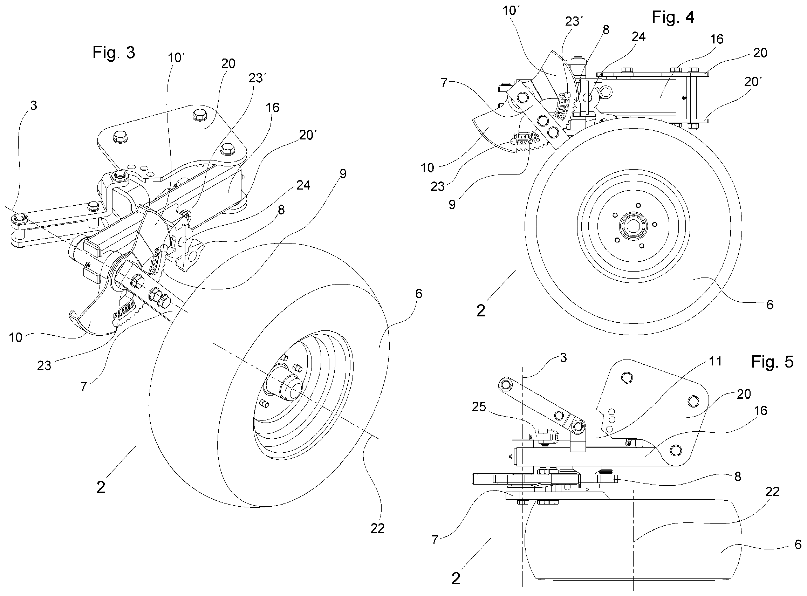

Die Verstellung der Arbeitstiefe und die Begrenzung des Schwenkwinkels des Schwenkstützrades 2 sind in der Figur 3 ersichtlich. Um die Schwenkachse 3 ist der Radhalm 7 drehbar im Stützradhalter 16 gelagert. Die Rahmenplatten 20, 20' verbinden den Stützradhalter 16 mit dem Pflugrahmen 4 aus Fig. 1 und Fig. 2. Das Stützrad 6 ist drehbar am unteren Ende des Radhalmes 7 gelagert. Die Lagerachse 22 ist parallel zur Schwenkachse 3 und annähernd senkrecht zur Fahrtrichtung 12 ausgerichtet. Mit dem Radhalm 7 fest verschraubt schwenkt das Zahnsegment 9 mit seiner Verzahnung ebenfalls konzentrisch um die Schwenkachse 3. Zwei Abdeckungen 10, 10' befinden sich um die Schwenkachse 3 beweglich angeordnet zwischen dem Zahnsegment 9 und dem Radhalm 7. Über federbelastete Sperrbolzen 23 werden die Abdeckungen verstellbar relativ zum Zahnsegment arretiert und überdecken einen Teil der Verzahnung des Zahnsegmentes. Mit einem Bolzen 24 ist die Klinke 8 leicht drehbar mit dem Stützradhalter verbunden. Die Klinke 8 fällt durch ihre Anordnung mit Schwerkraft nach unten. Wird der Drehpflug nun angehoben oder gewendet, fällt das Schwenkstützrad 2 nach unten. Der Radhalm 7 bewegt das Zahnsegment 9 und die Abdeckungen 10, 10'. Dabei gleitet die Verzahnung des Zahnsegmentes 9 und die Außenfläche der Abdeckung 10' wie bei einer Ratsche an der schwerkraftbelasteten Ecke der Klinke 8 vorbei. Wird der Drehpflug nun wieder abgesenkt, erhält das Stützrad 6 Bodenkontakt. Der Radhalm 7, das Zahnsegment 9 und die Abdeckungen 10,10' bewegen sich entgegengesetzt. Die Klinke gleitet nun auf einer der Abdeckungen 10, 10' bis zu deren Ende und fällt dann sicher und formschlüssig in die erstmögliche Verzahnungsausnehmung des Zahnsegmentes 9. Das Schwenkstützrad 2 ist nun in Aufwärtsbewegung festgesetzt und gibt die Arbeitstiefe des Drehpfluges reproduzierbar vor. Beim Wenden des Drehpfluges findet der Vorgang spiegelsymmetrisch mit der jeweils anderen Abdeckung 10', 10 statt. Zieht man von Hand den Sperrbolzen 23 der Abdeckung 10, 10' kann die Abdeckung 10, 10' relativ zum Zahnsegment 9 verstellt werden und gibt verschiedene Zahnausnehmungen frei, in welche die Klinke 8 zuerst fällt. Somit ist der Schwenkwinkel des Schwenkstützrades 2 und damit die Arbeitstiefe des Drehpfluges einstellbar.

Figur 4 zeigt die Anordnung aus Figur 3 in Seitenansicht von links. Sehr gut ersichtlich ist, wie die Klinke 8 um den Bolzen 24 drehbar gelagert ist und mit ihrer Außenkante gleich hinter dem unteren Ende der Abdeckung 10' in das Zahnsegment 9 fällt und dieses und somit den damit verbundenen Radhalm 7 und das Stützrad 6 am weiteren Aufwärtsschwenken hindert.

Figur 5 zeigt die gleiche Anordnung aus Figur 3 und Figur 4 in Draufsicht. Auf der dem Radhalm 7 gegenüberliegenden Seite des Stützradhalters 16 ist eine Dämpfungsvorrichtung 11 angebracht, welche sich gegen den Stützradhalter 16 abstützt und an einem Hebel 25 angreift, welcher drehfest über die Schwenkachse 3 mit dem Radhalm 7 verbunden ist und die Schwenkgeschwindigkeit beim Wendevorgang des Drehpfluges 1 begrenzt.

Die Erfindung beschränkt sich nicht auf die gezeigten und beschriebenen Beispiele. Auch mit einem weiteren Fahrwerk versehene Aufsattelpflüge sowie nicht in ihrer Breite verstellbare, starre Pflüge in anderen Ausstattungsvarianten sind denkbar.

## Patentansprüche

1. Schwenkstützrad (2) für einen Drehpflug (1), welches um eine zumindest annähernd parallel zum Boden und zumindest annähernd senkrecht zur Fahrtrichtung verlaufende Schwenkachse (3) schwenkbar mit dem Pflugrahmen (4) des Drehpfluges (1) verbunden ist, wobei der Drehpflug (1) mit seinen Pflugwerkzeugen (5) von einer rechts wendenden in eine links wendende Position einstellbar ist, wobei ein Stützrad (6) drehbar an einem Radhalm (7) montiert ist und mit diesem das Schwenkstützrad (2) bildet und das Stützrad (6) durch Kontakt mit dem Boden die Arbeitstiefe der Pflugwerkzeuge (5) begrenzt, indem der Schwenkwinkel des Schwenkstützrades (2) zum Pflugrahmen (4) begrenzt wird,
**dadurch gekennzeichnet,**
**dass** das Schwenkstützrad (2) aus einer in ausgehobener Stellung des Drehpfluges (1) tiefsten Schwenkstellung beim Absenken des Drehpfluges (1) in eine Arbeitsstellung schwenkbar ist, wobei die Arbeitsstellung durch zumindest eine beweglich angeordnete Klinke (8) vorgegeben wird, welche in eine Ausnehmung eines ein- oder mehrteiligen Zahnsegmentes (9) fällt und somit den Schwenkwinkel des Schwenkstützrades (2) formschlüssig begrenzt, wobei das Zahnsegment (9) zur Klinke (8) hin durch mindestens eine Abdeckung (10, 10') in einen wirksamen und einen unwirksamen Bereich aufgeteilt wird.

2. Schwenkstützrad für einen Drehpflug nach Anspruch 1,
**dadurch gekennzeichnet,**
**dass** die Überdeckung des Zahnsegmentes (9) durch Verstellen der Lage der Abdeckung (10,10') zum Zahnsegment (9) veränderbar ist.

3. Schwenkstützrad für einen Drehpflug nach Anspruch 1,
**dadurch gekennzeichnet,**
**dass** das Zahnsegment (9) einem Teil des Pflugrahmens (4) und die Klinke (8) dem Schwenkstützrad (2) zugeordnet ist.

4. Schwenkstützrad für einen Drehpflug nach Anspruch 1,
**dadurch gekennzeichnet,**
**dass** die Klinke (8) einem Teil des Pflugrahmens (4) und das Zahnsegment (9) dem Schwenkstützrad (2) zugeordnet ist.

5. Schwenkstützrad für einen Drehpflug nach vorstehenden Ansprüchen,
**dadurch gekennzeichnet,**
**dass** die wirksame Länge der Klinke (8) oder der wirksame Abstand der Klinke (8) zum Zahnsegment (9) hin einstellbar ausgebildet ist.

6. Schwenkstützrad für einen Drehpflug nach vorstehenden Ansprüchen,
**dadurch gekennzeichnet,**
**dass** die Schwenkgeschwindigkeit des Schwenkstützrades (2) durch eine Dämpfungsvorrichtung (11) begrenzt wird.

7. Schwenkstützrad für einen Drehpflug nach vorstehenden Ansprüchen,
**dadurch gekennzeichnet,**
**dass** die Bewegung der Klinke (8) oder das formschlüssige Zusammenspiel der Klinke (8) mit dem Zahnsegment (9) durch einen Energiespeicher oder durch Fremdenergie unterstützt wird.

8. Schwenkstützrad für einen Drehpflug nach vorstehenden Ansprüchen,
**dadurch gekennzeichnet,**
**dass** der Radhalm (7) und das Stützrad (6) mit einer weiteren Schwenkvorrichtung in der Längsachse des Radhalmes (7) um einen Winkel von annähernd 90° verschwenkbar ausgeführt sind.

## Claims

1. Swivelling support wheel (2) for a reversible plough (1), which is connected with the plough frame (4) of the reversible plough (1) rotatably around a swivelling shaft (3) that runs at least approximately parallel to the ground and at least approximately vertical to the direction of travel, whereby the reversible plough (1) with its ploughing tools (5) is adjustable from a right turning into a left turning position, whereby a support wheel (6) is mounted rotatably on a wheel blade (7) and forms the swivelling support wheel (2) with this and the support wheel (6) limits the working depth of the ploughing tools (5) through contact with the ground, in that the swivelling angle of the swivelling support wheel (2) to the plough frame (4) is limited,
**characterised in that**
the swivelling support wheel (2) is rotatable in a raised position of the reversible plough (1) for the lowest swivelling position when the reversible plough (1) is lowered into a working position, whereby the working position is given by at least one movable catch (8), which drops into a recess of a single-part or multi-part toothed segment (9) and in this ways positively limits the swivelling angle of the swivelling support wheel (2), whereby the toothed segment (9) is dived towards the catch (8) by at least one cover (10, 10') into an effective and a non-effective area.

2. Swivelling support wheel for a reversible plough in accordance with claim 1,
**characterised in that**
the cover of the toothed segment (9) can be varied by adjusting the position of the cover (10, 10') to the toothed segment (9).

3. Swivelling support wheel for a reversible plough in accordance with claim 1,
**characterised in that**
the toothed segment (9) is assigned to a part of the plough frame (4) and the catch (8) to the swivelling support wheel (2).

4. Swivelling support wheel for a reversible plough in accordance with claim 1,
**characterised in that**
the catch (8) is assigned to a part of the plough frame (4) and the toothed segment (9) to the swivelling support wheel (2).

5. Swivelling support wheel for a reversible plough in accordance with the above claims,
**characterised in that**
the effective length of the catch (8) or the effective clearance of the catch (8) is designed to be adjustable towards the toothed segment (9).

6. Swivelling support wheel for a reversible plough in accordance with the above claims,
**characterised in that**
the swivelling speed of the swivelling support wheel (2) is limited by a damping device (11).

7. Swivelling support wheel for a reversible plough in accordance with the above claims,
**characterised in that**
the movement of the catch (8) or the positive interplay of the catch (8) with the toothed segment (9) is supported by an energy storage device or by external power.

8. Swivelling support wheel for a reversible plough in accordance with the above claims,
**characterised in that**
the wheel blade (7) and the support wheel (6) are designed to be rotatable with another swivelling device in the lengthways axis of the wheel blade (7) at an angle of approximately 90°.

## Revendications

1. Roue d'appui pivotante (2) pour un chariot réversible (1), qui peut être pivotée autour d'un axe pivotant (3) suivant un parcours au moins à peu près parallèle au sol et au moins à peu près vertical par rapport au sens de la marche, reliée de façon pivotante au bâti de la charrue (4) du chariot réversible (1), sachant que le chariot réversible (1) peut être réglé avec ses outils de labourage (5) d'une position tournant à droite à une position tournant à gauche, sachant d'une roue d'appui (6) est montée de façon pivotante sur une tige de roue (7) et qu'avec cette dernière constitue la roue d'appui pivotante (2), la roue d'appui (6) limitant par contact avec le sol la profondeur des outils de labourage (5) en limitant l'angle de pivotement de la roue d'appui pivotante (2) par rapport au bâti de la charrue (4),
**caractérisée par le fait**
**que** la roue d'appui pivotante (2) peut être pivotée hors d'une position de pivotement la plus basse en position soulevée du chariot réversible (1) lors de l'abaissement du chariot réversible (1) dans une position de travail, sachant que la position de travail est donnée d'avance par au moins un loquet (8) disposé de façon mobile, qui tombe dans la réservation d'un segment denté (9) d'une ou plusieurs pièces en limitant ainsi l'angle de pivotement de la roue d'appui pivotante (2) avec une forme complémentaire, sachant que le segment denté (9) par rapport au loquet (8) est subdivisé par au moins un recouvrement (10, 10') en une zone efficace et une zone inefficace.

2. Roue d'appui pivotante pour un chariot réversible selon la revendication 1,
**caractérisée par le fait**
**que** le recouvrement du segment denté (9) peut être modifié par rapport au segment denté (9) en changeant la position du recouvrement (10,10').

3. Roue d'appui pivotante pour un chariot réversible selon la revendication 1,
**caractérisée par le fait**
**que** le segment denté (9) est attribué à une partie du bâti de la charrue (4) et le loquet (8) à la roue d'appui pivotante (2).

4. Roue d'appui pivotante pour un chariot réversible selon la revendication 1,
**caractérisée par le fait**
**que** le loquet (8) est attribué à une partie du bâti de la charrue (4) et le segment denté (9) à la roue d'appui pivotante (2).

5. Roue d'appui pivotante pour un chariot réversible selon les revendications précédentes,
**caractérisée par le fait**
**que** la longueur efficace du loquet (8) ou la distance efficace du loquet (8) par rapport au segment denté (9) est réalisé de façon réglable.

6. Roue d'appui pivotante pour un chariot réversible selon les revendications précédentes,
**caractérisée par le fait**
**que** la vitesse de pivotement de la roue d'appui pivotante (2) est limitée par un dispositif d'amortissement (11).

7. Roue d'appui pivotante pour un chariot réversible selon les revendications précédentes,
**caractérisée par le fait**
**que** le déplacement du loquet (8) ou le jeu de forme complémentaire du loquet (8) avec le segment denté (9) est soutenu par un réservoir d'énergie ou par une énergie extérieure.

8. Roue d'appui pivotante pour un chariot réversible selon les revendications précédentes,
**caractérisée par le fait**
**que** la tige de roue (7) et la roue d'appui (6) sont exécutées avec un autre dispositif de pivotement dans l'axe longitudinal de la tige de roue (7) en pouvant être pivoté d'un angle d'environ 90°.
